# EUROPEAN PATENT SPECIFICATION

(11) **EP 3 468 011 B1**
(45) Date of publication and mention of the grant of the patent: **13.04.2022**
(21) Application number: 17806235.2
(22) Date of filing: 21.04.2017
(51) Int. Cl.: H02K 9/04, H02K 5/18, H02K 11/33

(54) **MOTOR APPARATUS**
MOTORVORRICHTUNG
APPAREIL À MOTEUR

(30) Priority: 01.06.2016 JP 2016109880
(43) Date of publication of application: 10.04.2019
(73) Proprietor: Hitachi, Ltd., Tokyo 100-8280 (JP)
(72) Inventor: SAKURAI Naoki, Tokyo 100-8280 (JP); TOKOI Hirooki, Tokyo 100-8280 (JP); ENOMOTO Yuji, Tokyo 100-8280 (JP)
(74) Representative: MERH-IP Matias Erny Reichl Hoffmann Patentanwälte PartG mbB
(86) International application number: PCT/JP2017/016086
(87) International publication number: WO 2017/208675

(56) References cited:
- EP-A2- 2 993 764
- JP-A- H03 239 142
- JP-A- H11 122 875
- JP-A- H11 122 875
- JP-A- H11 155 257
- JP-A- H11 313 465
- JP-A- H11 313 465
- JP-A- 2001 008 411
- JP-A- 2003 169 449
- JP-A- 2014 521 297
- JP-A- 2015 201 490
- JP-A- 2015 201 490
- JP-U- S6 174 255

## Description

### Technical Field

The present invention relates to a motor apparatus in which a motor is integrated with a motor control device.

### Background Art

As a measure against global warming, reduction of carbon dioxide is strongly required worldwide. In order to reduce carbon dioxide, effectively utilization of electric power, that is, high efficiency of electric power equipment is required. Since motors account for about 50% of power consumption of the world, there is a great demand for high efficiency of the motors and a regulation value of the motor efficiency is introduced to each country.

Induction motors which are conventionally inexpensive and do not break down easily have been widely used in the motors. Meanwhile, permanent magnet motors are advantageous in efficiency and reduction in size, so that nowadays permanent magnet motors are widely and mainly used in automobiles and household electrical appliance. However, the permanent magnet motor may not rotate normally when a position of a rotating magnetic field of a stator and a position of a rotor are not completely aligned. In order to solve this problem, a motor control device (inverter) is necessary.

The size of the device increases when the inverter and the motor are provided separately, so that as disclosed in PTLs 1 to 3, a structure has been proposed in which the inverter is provided on an anti-load side of the motor.

### Prior Art Literature

### Patent Literature

PTL 1: JP-A-10-271763
PTL 2: JP-A-11-155257
PTL 3: JP-A-11-313465
PTL 4: JP 2015 201490 A
PTL 4 describes an electric motor that is arranged in a box having cooling fins.

### Summary of Invention

### Technical Problem

In PTLs 1 to 3, the inverter is cooled by a cooling fan and cooling fins provided on an inverter housing. Meanwhile, in PTLs 1 and 2, the motor is not provided with cooling means, and a heat insulating member is provided to prevent heat from the motor from being transmitted to the inverter, which is costly. In PTL 3, it is also costly that the motor is cooled by a heat pipe.

An object of the invention is to reduce the cost by sharing a cooling device between a motor and a motor control device by using cooling air from a cooling fan for cooling the motor control device also for cooling the motor, so that the motor is cooled more efficiently. Solution to Problem

The solution to the above problem is provided by a motor apparatus as claimed in claim 1.

### Advantageous Effect

According to the invention, the cooling air from the cooling fan for cooling the motor control device can also be used for cooling the motor, and the cost can be reduced by sharing the cooling device between the motor and the motor control device.

### Brief Description of Drawings

[Fig. 1] Fig. 1 is an example of a block circuit diagram of a control device that receives a three-phase alternating current and drives a three-phase permanent magnet motor.
[Fig. 2A] Fig. 2A is a view showing a motor apparatus not belonging to the invention.
[Fig. 2B] Fig. 2B is a surface view showing inverter cooling fins of the motor apparatus according to embodiment not belonging to the invention.
[Fig. 2C] Fig. 2C is a sectional view taken along the line B-B' in Fig. 2B.
[Fig. 2D] Fig. 2D is a sectional view taken along the line A-A' in Fig. 2A.
[Fig. 3] Fig. 3 is a view showing a motor apparatus according to embodiment 2 belonging to the invention.
[Fig. 4] Fig. 4 does not correspond in its entirety to the claimed invention and is intended for illustrative purposes only. Fig. 4 is a view showing a motor apparatus not belonging to the invention.
[Fig. 5A] Fig. 5A is a surface view showing inverter cooling fins of a motor apparatus according to embodiment 4 belonging to the invention.
[Fig. 5B] Fig. 5B is a sectional view taken along the line A-A' in Fig. 5A.
[Fig. 5C] Fig. 5C is a sectional view taken along the line B-B' in Fig. 5A.
[Fig. 6] Fig. 6 is a surface view showing a modification of the inverter cooling fins of the motor apparatus not belonging to the invention.
[Fig. 7] Fig. 7 is another block circuit diagram of a control device that receives a three-phase alternating current and drives a three-phase permanent magnet motor.
[Fig. 8] Fig. 8 does not correspond in its entirety to the claimed invention and is intended for illustrative purposes only. Fig. 8 is a view showing a motor apparatus not belonging to the invention.

### Description of Embodiments

Hereinafter, a plurality of embodiments of the invention will be described with reference to the drawings. In each of the drawings for explaining the embodiments, same constituent elements are denoted by the same symbols and reference numerals, and repetitive descriptions thereof will be omitted.

### [Embodiment 1 not belonging to the invention]

Prior to description of embodiments, a motor control device used in the motor apparatus of the invention will be described.

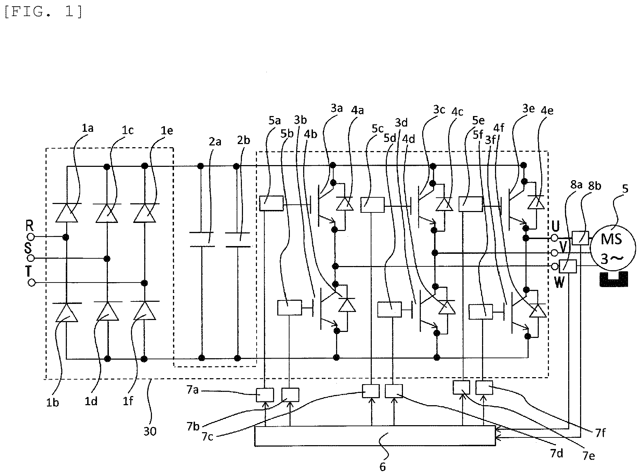

Fig. 1 shows an example of a block circuit diagram of the control device (inverter) that receives a three-phase alternating current and drives a three-phase permanent magnet motor. Diodes 1a to 1f constitute a three-phase diode bridge. An anode of the diode 1a and a cathode of the diode 1b are connected to an input of an R phase of three phases . Similarly, an anode of the diode 1c and a cathode of 1d are connected to an input of an S phase, and an anode of the diode 1e and a cathode of 1f are connected to an input of a T phase. An alternating current is full-wave rectified by the three-phase diode bridge constituted by the diodes 1a to 1f, and further, ripple components are removed by smoothing capacitors 2a, 2b to obtain a direct current.

Cathodes of diodes 4a to 4f are connected to collectors of IGBTs 3a to 3f, and anodes of the diodes 4a to 4f are connected to emitters of the IGBTs 3a to 3f. The collectors of the IGBTs 3a, 3c, and 3e are connected to the diodes 1a, 1c, 1e and the smoothing capacitors 2a, 2b, and the emitters of the IGBTs 3b, 3d, 3f are connected to the diodes 1b, 1d, 1f and the smoothing capacitors 2a, 2b. Gate drive circuits 5a to 5f are connected to gates of the IGBTs 3a to 3f. The emitter of the IGBT 3a and the collector of the IGBT 3b are connected to a W phase of a motor 5. Similarly, the emitter of the IGBT 3c and the collector of IGBT 3d are connected to a V phase of the motor 5, and the emitter of the IGBT 3e and the collector of the IGBT 3f are connected to a U phase of the motor 5.

In Fig. 1, the diodes 1a to 1f, the IGBTs 3a to 3f, and the diodes 4a to 4f are accommodated in a one power semiconductor module 30.

A current sensor 8a is provided on wirings among the W phase of the motor 5, the emitter of the IGBT 3a and the collector of the IGBT 3b, and a current sensor 8b is provided on wirings among the U phase of the motor 5, the emitter of the IGBT 3e and the collector of the IGBT 3f.

A microcomputer 6 generates a PWM signal which drives the IGBTs 3a to 3f based on current information of the current sensors 8a, 8b and a torque command value from the outside. Photocouplers 7a to 7f are provided between the microcomputer 6 and the gate drive circuits 5a to 5f, for isolation.

The inverter is constituted by the diodes 1a to 1f, the smoothing capacitors 2a, 2b, the IGBTs 3a to 3f, the diodes 4a to 4f, the gate drive circuits 5a to 5f, the microcomputer 6, the current sensors 8a, 8b, the photocouplers 7a to 7f, and a gate drive circuit and a power supply circuit for the microcomputer which are not described in Fig. 1.

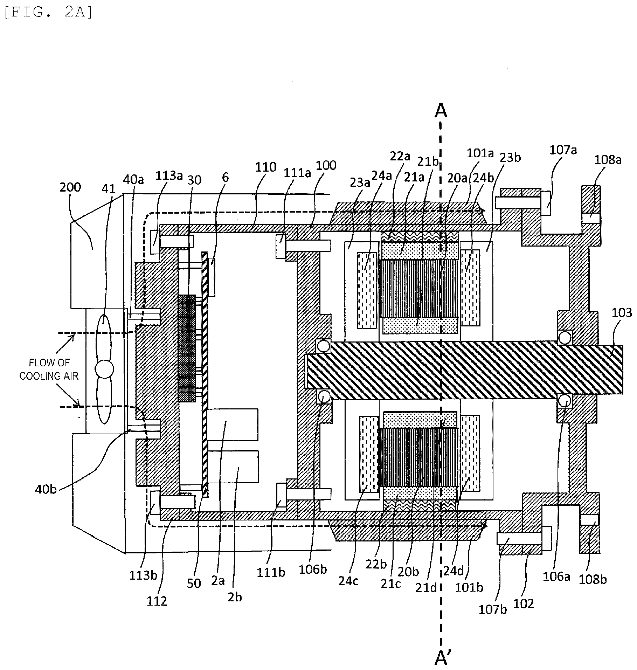

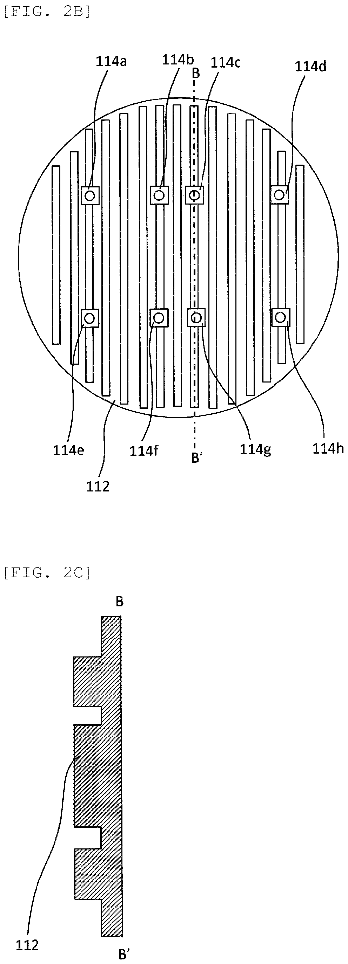

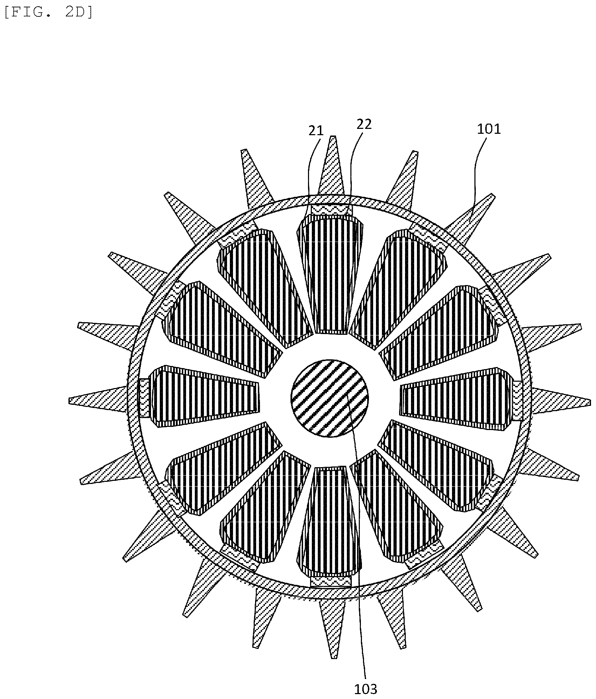

Figs. 2A to 2D show a motor apparatus according to embodiment 1 not belonging to the invention. Fig. 2A is a sectional view of the motor apparatus in a rotation shaft direction (taken along the line B-B' in Fig. 2B). Wirings 21a, 21b, 21c, and 21d are wound around electromagnetic steel sheets 20a, 20b, and the electromagnetic steel sheets 20a, 20b and the wirings 21a, 20b, 20c and 20d constitute a stator. Magnets 24a, 24b, 24c and 24d are accommodated in cases 23a, 23b, and a rotor is constituted by the cases 23a, 23b and the magnets 24a, 24b, 24c and 24d. The stator and the rotor are accommodated in a motor housing 100. Motor housing cooling fins 101a, 101b are provided on a surface of the motor housing 100. As shown in Fig. 2D which is a sectional view taken along the line A-A', a plurality of motor housing cooling fins 101a, 101b are provided in a direction of a motor rotation shaft 103 along an outer periphery of the motor. The cases 23a, 23b are connected to the motor rotation shaft 103 that is connected to a load. In the motor housing 100 and a left end portion of the motor in Fig. 2A, a bearing 106b is provided to support the motor rotation shaft 103. The motor housing 100 is connected to a flange 102 by screws 107a, 107b. The motor rotation shaft 103 is supported by a bearing 106a that is connected to the flange 102. The flange 102 is fixed to a device that is not shown in the drawing by bolt holes 108a, 108b.

An inverter housing 110 is connected to the motor housing 100 by bolts 111a, 111b, on an opposite side (anti-load side) of the motor rotation shaft 103 of the motor housing 100. Inverter cooling fins 112 are connected to a back surface (anti-load side) of the inverter housing 110 by bolts 113a, 113b. A cooling fan 41 is provided on the inverter cooling fins 112 through plinths 40a, 40b. Fig. 2B is a surface view of the inverter cooling fins 112 when viewed from the left side of Fig. 2A, and Fig. 2C is a sectional view of the inverter cooling fins 112 in the rotation shaft direction. The plinths 40a, 40b are attached to screw holes 114a to 114h. A side of the inverter cooling fins 112 opposite to the cooling fan is flat, and the power semiconductor module 30 is attached the side via a material which has high thermal conductivity and high viscosity, such as silicone grease. A printed substrate 50 is provided on the power semiconductor module 30, and the capacitors 2a, 2b, the microcomputer 6 and the current sensors 8a, 8b, the photocouplers 7a to 7f, the gate drive circuit and the power supply circuit for the microcomputer which are not shown in Fig. 2A are mounted on the printed substrate 50.

An air duct cover 200 is provided to cover the cooling fan 41, the inverter housing 110 and the motor housing 100. The air duct cover 200 covers the inverter cooling fins 112 and the inverter housing 110 and extends to end portions of the motor housing cooling fins 101a, 101b which are on an anti-load side of the motor. In an embodiment not belonging to the invention, the air duct cover 200 may further extended to cover the motor housing cooling fins 101a, 101b, but if the air duct cover 200 is extended, vibration of the air duct cover increases and a firm support member is necessary. By setting a covering length of the air duct cover up to end portions of the motor housing cooling fins 101a, 101b on the anti-load side of the motor, the motor can also be cooled by cooling air from the cooling fan, at same time, the vibration of the air duct cover can be suppressed and support of the air duct cover can be simplified.

The present embodiment operates in the following manner. When the motor control is performed, a current flows in the power semiconductor module 30 and the module 30 generates heat. The heat is transmitted to the inverter cooling fins 112 and is dissipated by the cooling air from the cooling fan 41. The cooling air from the cooling fan 41 also flows to the motor housing cooling fins 101a, 101b of the motor housing 100 from the inverter cooling fins 112 through an outside of the inverter housing 110 due to the air duct cover 200, to cool the stator and the rotor of the motor. The power semiconductor module 30 and the inverter cooling fins 112 that cool the power semiconductor module 30 are less susceptible to heat from the stator and the rotor of the motor for being separated from the motor. At the same time, the cooling air from the cooling fan 41 can be used to cool the motor in addition to the inverter, and the cost can be reduced by sharing the cooling device between the motor and the inverter (control device).

### [Embodiment 2 belonging to the invention]

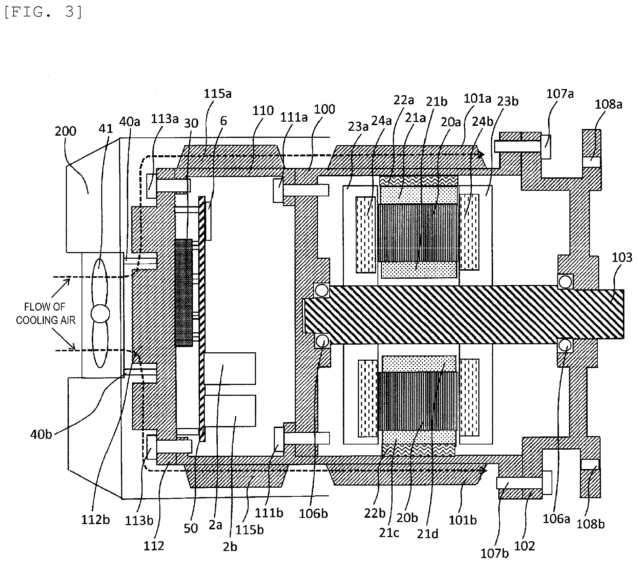

Fig. 3 is a view showing a motor apparatus according to embodiment 2 of the invention. Inverter housing cooling fins 115a, 115b are provided on the inverter housing 110. A plurality of the inverter housing cooling fins 115a, 115b are provided in the direction of the motor rotation shaft 103 along an outer periphery of the inverter housing. Other electronic components other than the power semiconductor module 30, such as the capacitors 2a, 2b and the microcomputer 6 also generate heat although the heat is 1/100 or less as compared with that of the module 30. A temperature inside the inverter housing 110 rises due to the heat. Since the inverter housing cooling fins 115a, 115b are provided, the heat can be dissipated by the cooling air from the cooling fan 41, and the rise in the temperature inside the inverter housing 110 can be suppressed.

When an interval in a peripheral direction of the inverter housing cooling fins 115a, 115b is identical to an interval in a peripheral direction of the motor housing cooling fins 101a, 101b, and passages for cooling air of the motor housing cooling fins and the inverter housing cooling fins are aligned, the cooling air from the cooling fan 41 can be efficiently transmitted from the inverter housing cooling fins 115a, 115b to the motor housing cooling fins 101a, 101b, so that the motor can be cooled more efficiently.

### [Embodiment 3 not belonging to the invention]

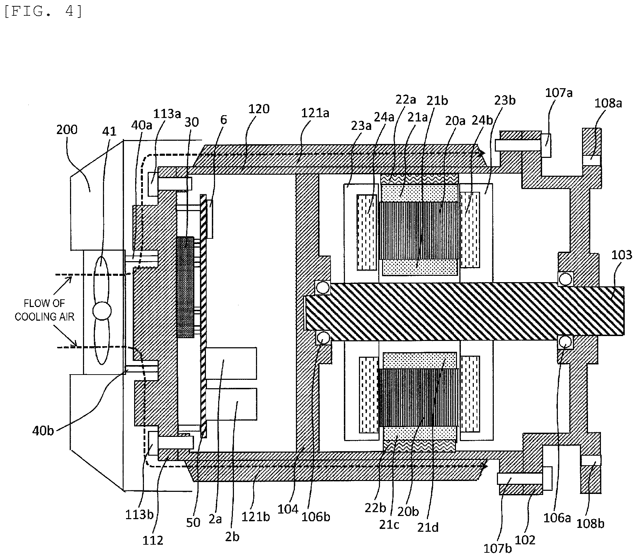

Fig. 4 is a view showing a motor apparatus according to embodiment 3 not belonging to the invention. A motor housing and an inverter housing are constituted into one housing 120. Housing cooling fins 121a, 121b which are continuous from a motor portion to an inverter portion are provided on a surface of the housing 120. A plurality of the housing cooling fins 121a, 121b are provided in the direction of the motor rotation shaft 103 along an outer periphery of the motor. The air duct cover 200 covers the inverter cooling fins 112 and extends up to end portions of the housing cooling fins 121a, 121b on an anti-load side of the motor. The air duct cover 200 may be further extended to cover the housing cooling fins 121a, 121b. By setting a cover length of the air duct cover up to end portions of the housing cooling fins 121a, 121b on the anti-load side of the motor, the vibration of the air duct cover can be suppressed and support of the air duct cover can be simplified.

According to the present embodiment, the motor housing and the inverter housing are shared to from a single housing, so that the housing can be made by one mold. Since there is no connection part between the motor housing and the inverter housing, the cost of the housing can be reduced. In addition, the housing cooling fins 121a, 121b are connected from the inverter portion to the motor portion, and the cooling air flows through the intervals between the housing cooling fins 121a, 121b, so that the cooling performance is enhanced. Further, it is not necessary to provide the air duct cover up to the motor portion, so that the cost can be further reduced.

### [Embodiment 4 belonging to the invention]

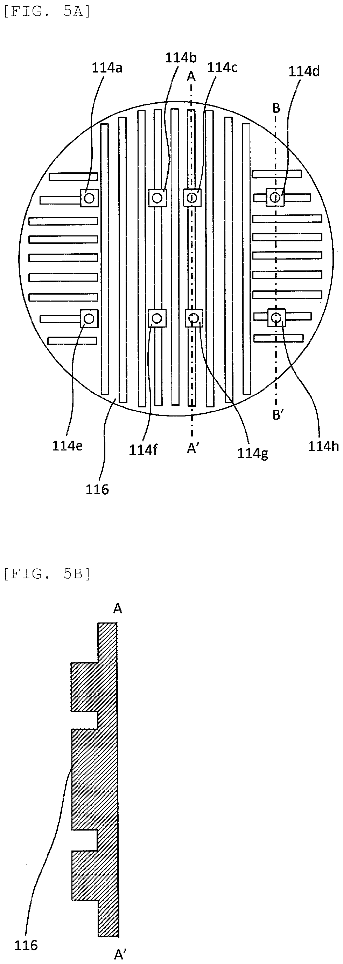

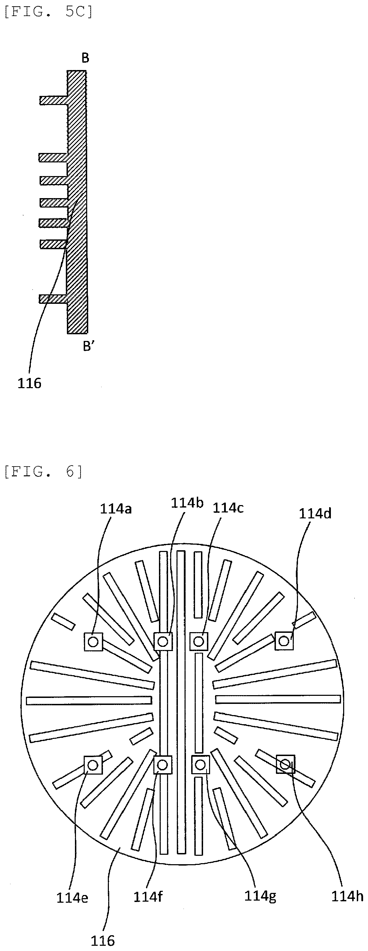

Figs. 5A to 5C are views showing a motor apparatus according to embodiment 4 of the invention. Fig. 5A is a surface view of inverter cooling fins 116 when viewed from the left side of Fig. 4, Fig. 5B is a sectional view taken along the line A-A' in Fig. 5A, and Fig. 5C is a sectional view taken along the line B-B' in Fig. 5A. As shown in Fig. 5A, fins of the inverter cooling fins 116 are provided in both vertical and horizontal directions in the drawing.

In Fig. 2B, the fins of the inverter cooling fins 112 are only provided in the vertical direction of the drawing, and the cooling air mainly flows only in the vertical direction and is bent by the air duct cover 200 to reach the motor housing cooling fins 101a, 101b. In the present embodiment, since the fins of the inverter cooling fins 116 are provided in both vertical and horizontal directions in the drawing, the cooling air flows not only in the vertical direction, but also in the horizontal direction. Thus, a volume of cooling air which is bent by the air duct cover 200 and reaches the motor housing cooling fins 101a, 101b can be increased, and the cooling performance can be enhanced.

Fig. 6 shows a modification not belonging to the invention. As shown in the drawing, in this modification, fins of the inverter cooling fins 116 are provided radially from a center towards an outer side in a radial direction. In this modification, similarly to embodiment 4, a volume of cooling air that reaches the motor housing cooling fins 101a, 101b can also be increased, and the cooling performance can also be enhanced.

### [Embodiment belonging to the invention]

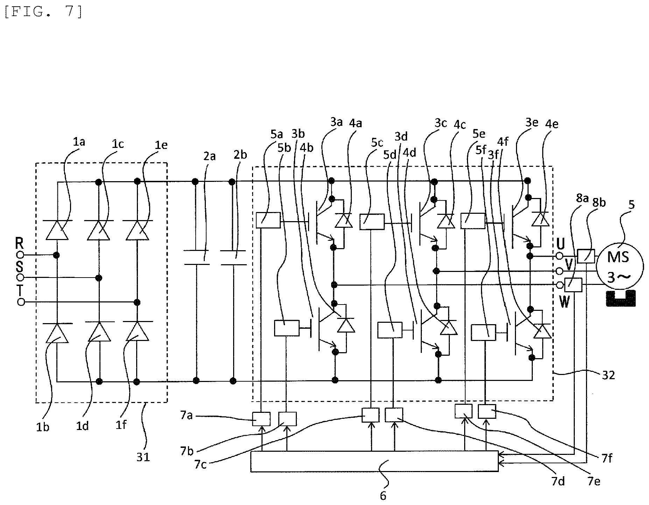

Fig. 7 shows another block circuit diagram of a control device that receives a three-phase alternating current and drives a three-phase permanent magnet motor. In Fig. 7, the three-phase diode bridge constituted by the diodes 1a to 1f is accommodated in the single power semiconductor module 30, and the IGBTs 3a to 3f and the diodes 4a to 4f are accommodated in a single switching semiconductor module (IGBT module) 32.

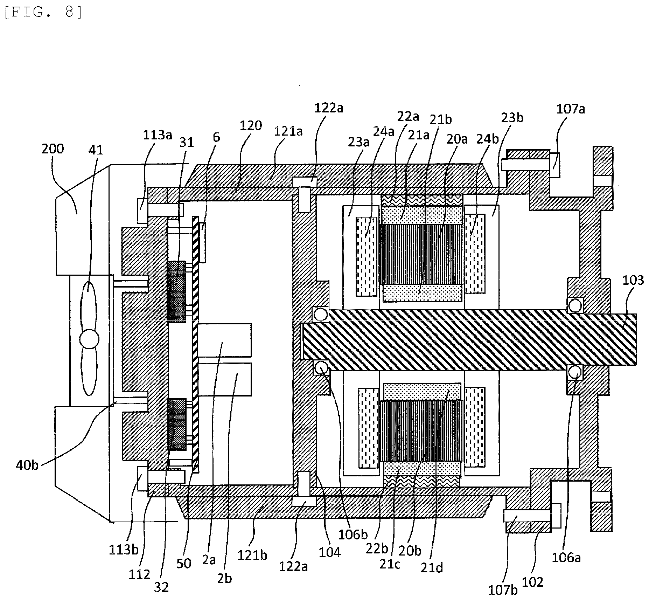

Fig. 8 is a view showing a motor apparatus not belonging to the invention. In embodiments 1 and 3 not belonging to the invention and embodiment 2 belonging to the invention, since the diodes 1a to 1f, the IGBTs 3a to 3f, and the diodes 4a to 4f are accommodated in the single power semiconductor module 30, and the module is large, there is a problem that in a center portion of the module 30, an amount of heat dissipation is small and a rise in temperature is significant. In the present embodiment, a rectifier diode module 31 and the switching semiconductor module (IGBT module) 32 are provided in the inverter cooling fins 112 or 116 at a distance away from each other. Therefore, since a size of the module is reduced and heat radiation is dispersed, the cooling performance of the inverter cooling fins 112 or 116 can be further enhanced and the rise in temperature of the diodes 1a to 1f, the IGBTs 3a to 3f and the diodes 4a to 4f can be suppressed.

Further, although the "permanent magnet motor" has been described in each embodiment, the invention can also apply other motors such as "induction motors".

### Reference Sign List

- 1a to 1f:: diode
- 2a and 2b:: capacitor
- 3a to 3f:: IGBT
- 4a to 4f:: diode
- 5:: motor
- 5a to 5f:: gate drive circuit
- 6:: microcomputer
- 7a to 7f:: photocoupler
- 8a, 8b:: current sensor
- 20a, 20b:: electromagnetic steel sheet
- 21a, 21b:: wiring
- 23a and 23b:: case
- 24a, 24b, 24c and 24d:: magnet
- 30:: power semiconductor module
- 31:: rectifier diode module
- 30:: switching semiconductor module
- 40a, 40b:: plinth
- 41:: cooling fan
- 50:: printed substrate
- 100:: motor housing
- 101a, 101b:: motor housing cooling fins
- 102:: flange
- 103:: motor rotation shaft
- 106a, 106b:: bearing
- 110:: inverter housing
- 112:: inverter cooling fin
- 115a, 115b:: inverter housing cooling fin
- 116:: inverter cooling fin
- 120:: housing
- 121a, 121b:: housing cooling fin
- 200:: air duct cover

## Claims

1. A motor apparatus comprising:
a motor (5) having a rotation shaft for driving a load;
a motor control device which is configured to control the motor (5);
a motor housing (100) which includes a plurality of motor housing cooling fins (101a, b), extending in a rotation shaft direction of the motor (5), on an outer periphery thereof and the motor housing is configured to accommodate the motor (5);
a motor control device housing (119) which is provided on an anti-load side of the motor housing (100) and is configured to accommodate the motor control device;
a plurality of motor control device housing cooling fins (115a, 115b), extending in the rotation shaft direction of the motor, on an outer periphery of the motor control device housing (110);
motor housing cooling fins (101a, b) being arranged at equal distances from each other continuously around an entire circumference of the motor housing (100), wherein
intervals in peripheral direction of the motor housing cooling fins (101a, b) and motor control device housing cooling fins (115a, b) are equal and passages for cooling air of the motor housing cooling fins (101a, b) and the motor control device housing cooling fins (115a, b) are aligned;
motor control device cooling fins (112, 116) which are provided on the anti-load side of the motor control device housing,
wherein the motor apparatus can be oriented such that the motor control device cooling fins (112, 116) on the anti-load side of the motor housing (100) are provided in both vertical and horizontal directions;
a cooling fan (41) which is provided on the anti-load side of the motor control device cooling fins (112, 116); and
an air duct cover (200) which is configured to guide cooling air from the cooling fan (41), which is blown to the motor control device cooling fins, to the motor housing cooling fins (101a, b),
wherein the air duct cover (200) covers the motor control device housing cooling fins (115a, b), and
wherein the air duct cover (200) is not further extending to cover the motor housing cooling fins (101a, b), but is arranged up to end portions on the anti-load side of the motor housing cooling fins (101a, b), such that a covering length of the air duct cover (200) is set up to the end portions of the motor housing cooling fins (101a, b) on the anti-load side of the motor.

2. The motor apparatus according to claim 1,
wherein the motor housing (100) and the motor control device housing are integrally formed as one housing, and
the motor housing cooling fins (101a, b) and the motor control device housing cooling fins are integrally formed.

3. The motor apparatus according to any one of claims 1 to 2,
wherein the motor control device cooling fins (112, 116) are provided radially from a center towards an outer side in a radial direction.

4. The motor apparatus according to any one of claims 1 to 2,
wherein a power semiconductor module constituting the motor control device is attached to the motor control device cooling fins (112, 116).

5. The motor apparatus according to claim 4,
wherein the power semiconductor module constituting the motor control device is divided into a rectifier diode module and a switching semiconductor module (30), and attached to the motor control device cooling fins (112, 116).

## Patentansprüche

1. Motorvorrichtung, die Folgendes umfasst:
einen Motor (5) mit einer Drehwelle zum Antreiben einer Last;
eine Motorsteuereinrichtung, die konfiguriert ist, den Motor (5) zu steuern;
ein Motorgehäuse (100), das mehrere Motorgehäuse-Kühlrippen (101a, b) enthält, die sich in einer Drehwellenrichtung des Motors (5) auf einem Außenumfang davon erstrecken, und wobei das Motorgehäuse konfiguriert ist, den Motor (5) aufzunehmen;
ein Motorsteuereinrichtungsgehäuse (119), das auf einer von der Last abgewandten Seite des Motorgehäuses (100) vorgesehen ist und konfiguriert ist, die Motorsteuereinrichtung aufzunehmen;
mehrere Motorsteuereinrichtungsgehäuse-Kühlrippen (115a, b), die sich in der Drehwellenrichtung des Motors auf einem Außenumfang des Motorsteuereinrichtungsgehäuses (110) erstrecken;
wobei die Motorgehäuse-Kühlrippen (101a, b) in gleichen Abständen voneinander auf ununterbrochene Weise um einen gesamten Umfang des Motorgehäuses (100) angeordnet sind, wobei
die Abstände in der Umfangsrichtung der Motorgehäuse-Kühlrippen (101a, b) und der Motorsteuereinrichtungsgehäuse-Kühlrippen (115a, b) gleich sind und die Kanäle zum Kühlen von Luft der Motorgehäuse-Kühlrippen (101a, b) und der Motorsteuereinrichtungsgehäuse-Kühlrippen (115a, b) aufeinander ausgerichtet sind;
Motorsteuereinrichtungs-Kühlrippen (112, 116), die auf der von der Last abgewandten Seite des Motorsteuereinrichtungsgehäuses vorgesehen sind,
wobei die Motorvorrichtung derart orientiert sein kann, dass die Motorsteuereinrichtungs-Kühlrippen (112, 116) auf der von der Last abgewandten Seite des Motorgehäuses (100) sowohl in vertikaler als auch in horizontaler Richtung bereitgestellt sind;
ein Kühlgebläse (41), das auf der von der Last abgewandten Seite der Motorsteuereinrichtungs-Kühlrippen (112, 116) vorgesehen ist; und
eine Luftleitungsabdeckung (200), die konfiguriert ist, Kühlluft vom Kühlgebläse (41), die zu den Motorsteuereinrichtungs-Kühlrippen geblasen wird, zu den Motorgehäuse-Kühlrippen (101a, b) zu leiten,
wobei die Luftleitungsabdeckung (200) die Motorsteuereinrichtungsgehäuse-Kühlrippen (1151, b) abdeckt, und
wobei sich die Luftleitungsabdeckung (200) nicht derart weiter erstreckt, dass die Motorgehäuse-Kühlrippen (101a, b) abgedeckt sind, sondern bis zu den Endabschnitten auf der von der Last abgewandten Seite der Motorgehäuse-Kühlrippen (101a, b) angeordnet ist, derart, dass eine Abdeckungslänge der Luftleitungsabdeckung (200) bis zu den Endabschnitten der Motorgehäuse-Kühlrippen (101a, b) auf der von der Last abgewandten Seite des Motors eingestellt ist.

2. Motorvorrichtung nach Anspruch 1,
wobei das Motorgehäuse (100) und das Motorsteuereinrichtungsgehäuse als ein Gehäuse einteilig ausgebildet sind, und
die Motorgehäuse-Kühlrippen (101a, b) und die Motorsteuereinrichtungsgehäuse-Kühlrippen einteilig ausgebildet sind.

3. Motorvorrichtung nach einem der Ansprüche 1 bis 2,
wobei die Motorsteuereinrichtungs-Kühlrippen (112, 116) ausgehend von einer Mitte in Richtung einer Außenseite in einer radialen Richtung radial vorgesehen sind.

4. Motorvorrichtung nach einem der Ansprüche 1 bis 2,
wobei ein Leistungshalbleitermodul, das die Motorsteuereinrichtung bildet, an den Motorsteuereinrichtungs-Kühlrippen (112, 116) befestigt ist.

5. Motorvorrichtung nach Anspruch 4,
wobei das Leistungshalbleitermodul, das die Motorsteuereinrichtung bildet, in ein Gleichrichterdiodenmodul und ein Schalthalbleitermodul (30) unterteilt und an den Motorsteuereinrichtungs-Kühlrippen (112, 116) befestigt ist.

## Revendications

1. Appareil à moteur comprenant :
un moteur (5) ayant un arbre de rotation destiné à entraîner une charge ;
un dispositif de commande de moteur qui est configuré pour commander le moteur (5) ;
un boîtier de moteur (100) qui inclut une pluralité d'ailettes de refroidissement de boîtier de moteur (101a, b), s'étendant dans une direction de l'arbre de rotation du moteur (5), sur une périphérie extérieure de celui-ci et le boîtier de moteur est configuré pour loger le moteur (5) ;
un boîtier de dispositif de commande de moteur (119) qui est prévu sur un côté anti-charge du boîtier de moteur (100) et qui est configuré pour loger le dispositif de commande de moteur ;
une pluralité d'ailettes de refroidissement de boîtier de dispositif de commande de moteur (115a, 115b), s'étendant dans la direction de l'arbre de rotation du moteur, sur une périphérie extérieure du boîtier de dispositif de commande de moteur (110) ;
des ailettes de refroidissement de boîtier de moteur (101a, b) qui sont agencées à équidistance les unes des autres en continu autour de toute la circonférence du boîtier de moteur (100), dans lequel
des intervalles dans une direction périphérique des ailettes de refroidissement de boîtier de moteur (101a, b) et des ailettes de refroidissement de boîtier de dispositif de commande de moteur (115a, b) sont égaux et des passages pour l'air de refroidissement des ailettes de refroidissement de boîtier de moteur (101a, b) et des ailettes de refroidissement de boîtier de dispositif de commande de moteur (115a, b) sont alignés ;
des ailettes de refroidissement de dispositif de commande de moteur (112, 116) qui sont prévues sur le côté anti-charge du boîtier de dispositif de commande de moteur,
dans lequel l'appareil à moteur peut être orienté de telle sorte que les ailettes de refroidissement de dispositif de commande de moteur (112, 116) sur le côté anti-charge du boîtier de moteur (100) sont prévues à la fois dans la direction verticale et dans la direction horizontale ;
un ventilateur de refroidissement (41) qui est prévu sur le côté anti-charge des ailettes de refroidissement de dispositif de commande de moteur (112, 116) ; et
une couverture de conduit d'air (200) qui est configurée pour guider l'air de refroidissement provenant du ventilateur de refroidissement (41), qui est soufflé jusqu'aux ailettes de refroidissement de dispositif de commande de moteur, jusqu'aux ailettes de refroidissement de boîtier de moteur (101a, b),
dans lequel la couverture de conduit d'air (200) couvre les ailettes de refroidissement de boîtier de dispositif de commande de moteur (115a, b), et
dans lequel la couverture de conduit d'air (200) ne s'étend pas plus loin pour couvrir les ailettes de refroidissement de boîtier de moteur (101a, b), mais est agencée jusqu'à des portions d'extrémité sur le côté anti-charge des ailettes de refroidissement de boîtier de moteur (101a, b), de telle sorte qu'une longueur de couverture de la couverture de conduit d'air (200) est fixée jusqu'aux portions d'extrémité des ailettes de refroidissement de dispositif de moteur (101a, b) sur le côté anti-charge du moteur.

2. Appareil à moteur selon la revendication 1 ;
dans lequel le boîtier de moteur (100) et le boîtier de dispositif de commande de moteur sont formés de manière intégrale en tant qu'un seul boîtier, et
les ailettes de refroidissement de boîtier de moteur (101 a, b) et les ailettes de refroidissement de boîtier de dispositif de commande de moteur sont formées de manière intégrale.

3. Appareil à moteur selon l'une quelconque des revendications 1 à 2, dans lequel les ailettes de refroidissement de dispositif de commande de moteur (112, 116) sont prévues radialement depuis un centre vers un côté extérieur dans une direction radiale.

4. Appareil à moteur selon l'une quelconque des revendications 1 à 2, dans lequel un module semi-conducteur de puissance constituant le dispositif de commande de moteur est fixé sur les ailettes de refroidissement de dispositif de commande de moteur (112, 116).

5. Appareil à moteur selon la revendication 4,
dans lequel le module semi-conducteur de puissance constituant le dispositif de commande de moteur est divisé en un module à diodes redresseur et un module semi-conducteur de commutation (30), et est fixé sur les ailettes de refroidissement de dispositif de commande de moteur (112, 116).
